**Europäisches Patentamt**

**European Patent Office**

**Office européen des brevets**

(19)

(11) Numéro de publication: **0 020 703**
**B1**

(12) **FASCICULE DE BREVET EUROPEEN**

(45) Date de publication du fascicule du brevet: **15.09.82**

(21) Numéro de dépôt: **80900095.3**

(22) Date de dépôt: **02.01.80**

(86) Numéro de dépôt international:
**PCT/FR80/00001**

(87) Numéro de publication internationale:
**WO 80/01372 10.07.80 Gazette 80/15**

(51) Int. Cl.³: **B 62 D 1/14, B 62 D 63/06,**
**B 62 D 13/06, B 60 G 3/00**

(54) **DISPOSITIF D'ATTELAGE POUR REMORQUE ET REMORQUE COMPRENANT UN TEL DISPOSITIF.**

(30) Priorité: **03.01.79 FR 7900077**

(43) Date de publication de la demande:
**07.01.81 Bulletin 81/1**

(45) Mention de la délivrance du brevet:
**15.09.82 Bulletin 82/37**

(84) Etats contractants désignés:
**AT CH DE GB LU NL SE**

(56) Documents cités:
**BE - A - 533 683**
**DE - A - 2 006 819**
**FR - A - 526 803**
**FR - A - 610 135**
**FR - A - 788 790**
**FR - A - 1 483 756**
**FR - E - 38 345**
**FR - E - 85 495**
**GB - A - 756 424**
**US - A - 2 313 235**

(73) Titulaire: **FEUVRAY, Alain**
**21 rue de Lattre de Tassigny**
**71100 Châlon sur Saône (FR)**

(72) Inventeur: **FEUVRAY, Alain**
**21 rue de Lattre de Tassigny**
**71100 Châlon sur Saône (FR)**

(74) Mandataire: **Bruder, Michel**
**Cabinet Michel Bruder 10, rue de la Pépinière**
**F-75008 Paris (FR)**

Courier Press, Leamington Spa, England.

Dispositif d'attelage pour remorque et remorque comprenant un tel dispositif

La présente invention concerne un dispositif d'attelage pour remorque.

L'invention vise également une remorque, en particulier du genre caravane, comportant un tel dispositif d'attelage.

On connaît d'après le certificat d'addition français n° 38 345 un dispositif d'attelage pour remorque dont le but est de faciliter les manoeuvres en marche arrière.

Ce dispositif connu comprend deux bras croisés, chacun ayant une extrémité articulée à la remorque et l'autre au véhicule tracteur, et des moyens de verrouillage comprenant deux crémaillères longitudinales articulées et qui relient chacune les deux bras.

Pour effectuer une marche arrière en ligne droite, le conducteur bloque les deux crémaillères de façon que les bras soient en position symétrique.

Ce dispositif est lourd, complexe et malcommode, et entraîne des difficultés d'appréciation quant à l'alignement de la remorque avec le véhicule tracteur avant le verrouillage.

Pour effectuer un virage en marche arrière, l'utilisateur incline d'abord le véhicule par rapport à la remorque selon la trajectoire désirée. Ceci peut entraîner de grandes difficultés d'appréciation.

On ne peut ensuite que suivre une trajectoire de rayon bien déterminé, et si le conducteur agit ensuite sur la direction du véhicule, il fait riper les roues de la remorque ou du véhicule.

Le but de l'invention est de remédier à ces inconvénients en réalisant un dispositif d'attelage permettant d'effectuer très facilement les manoeuvres en marche arrière.

Suivant l'invention, le dispositif d'attelage pour remorque, comprenant deux bras croisés comportant chacun une extrémité articulée à la remorque et une extrémité destinée à être accrochée au véhicule tracteur, et des moyens de verrouillage des bras l'un par rapport à l'autre, est caractérisé en ce que les moyens de verrouillage comprennent un orifice pratiqué dans chacun desdits bras au point où ces derniers se croisent quand le véhicule tracteur et la remorque sont alignés, et une goupille engagée de façon amovible dans ces deux orifices.

Pour effectuer une marche arrière en ligne droite, on introduit la goupille simultanément dans les deux orifices en regard. Une fois la goupille ainsi mise en place dans les deux orifices, les deux bras croisés sont maintenus dans une position telle que le véhicule et la remorque sont alignés.

Le dispositif conforme à l'invention est donc considérablement plus simple que le dispositif connu, beaucoup plus facile à utiliser, et garantit l'alignement du véhicule et de la remorque.

Selon un autre objet de l'invention, la remorque comprenant deux bras croisés comportant chacun une extrémité articulée à la remorque et une extrémité destinée à être accrochée au véhicule tracteur et des moyens de verrouillage pour maintenir ces deux bras en position symétrique par rapport au plan médian longitudinal de la remorque lors d'une marche arrière, est caractérisée en ce que les roues de cette remorque sont fixées à cette dernière par des pivots comprenant des moyens pour assurer l'orientation des roues en fonction de la trajectoire du véhicule tracteur.

Ainsi, pour effectuer une marche arrière selon une trajectoire courbe, on bloque l'attelage de manière à maintenir la remorque alignée avec le véhicule tracteur. Au cours de la marche arrière, les roues de la remorque pivotent autour de leur pivot respectif pour s'orienter spontanément suivant la trajectoire qui est définie par l'orientation des roues avant de ce véhicule.

Les moyens prévus selon l'invention sont beaucoup plus simples et plus commodes à utiliser que ceux enseignés par le document antérieur. Le conducteur n'a pas à évaluer sa trajectoire avant d'entreprendre la manoeuvre, ni à se tenir à une trajectoire à rayon de courbure fixe, et ne risque pas de faire riper les roues de la remorque.

Dans une réalisation avantageuse de cet objet de l'invention, des moyens sont prévus pour bloquer la rotation de chaque roue autour de l'axe du pivot correspondant dans la direction longitudinale de la remorque.

Ainsi, pour circuler en marche arrière, le conducteur verrouille l'attelage dans la position d'alignement de la remorque avec de véhicule, mais permet aux roues de la remorque de s'orienter sur leurs pivots. Au contraire, en marche avant, il libère l'attelage, mais bloque les roues dans la position où leur plan est parallèle au plan longitudinal médian de la remorque.

D'autres avantages de la présente invention ressortiront encore de la description ci-après. Aux dessins annexés, donnés à titre d'exemples non limitatifs:

— la figure 1 est une vue schématique en perspective du dispositif d'attelage conforme à l'invention,

— la figure 2 est une vue en élévation latérale avec arrachements d'une remorque comprenant un dispositif d'attelage conforme à l'invention et attelée à un véhicule tracteur,

— la figure 3 est une vue à grande échelle avec arrachement d'un pivot de roue de la remorque selon la figure 2,

— la figure 4 est une vue en plan avec arrachement de la remorque, montrant le montage des roues,

— la figure 5 est une vue en plan montrant la remorque attelée à un véhicule tracteur se déplaçant en marche avant, et

— la figure 6 est une vue en plan montrant la remorque attelée à un véhicule tracteur se déplaçant en marche arrière.

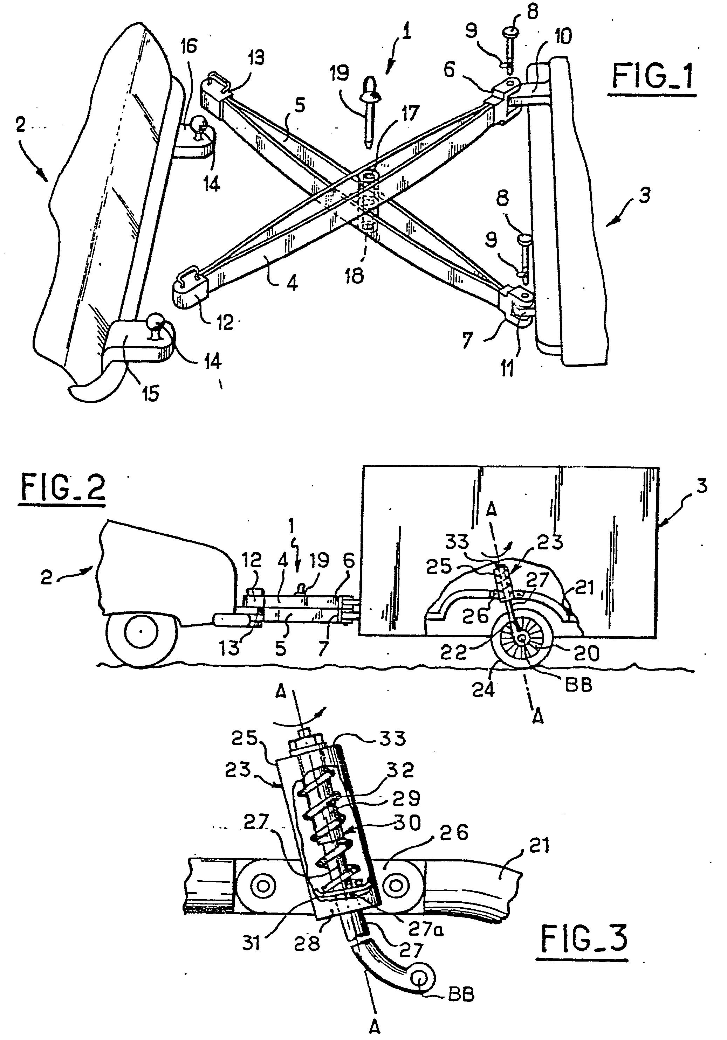

En référence à la figure 1, le dispositif d'attelage 1 sert à atteler une remorque 3 à un véhicule tracteur 2. Le dispositif 1 comprend principalement deux bras croisés 4, 5. Ces bras croisés 4, 5 comprennent, à leurs extrémités arrières, des fourches 6, 7 destinées à être reliées de façon articulée, au moyen de goupilles 8 munies d'un cliquet rétractable 9, à des pattes respectives 10, 11 rendues solidaires de la remorque 3. Les extrémités avant 12, 13 des bras croisés 4, 5 sont destinées à être fixées de façon articulée, à des rotules 14 rendues solidaires de l'arrière du véhicule tracteur 2, au moyen de pattes de fixation 15, 16.

Chaque bras croisé 4, 5 comporte entre ses deux extrémités 6, 12; 7, 13 un orifice 17, 18. Lesdits orifices 17, 18 sont coaxiaux quand le véhicule tracteur 2 et la remorque 3 sont alignés, comme représenté figure 1. Une goupille 19 peut être engagée de façon amovible dans ces deux orifices 17, 18 quand ils sont coaxiaux, pour verrouiller les bras croisés 4, 5 dans une position symétrique par rapport au plan médian longitudinal de la remorque 3.

Le fonctionnement du dispositif d'attelage précité est le suivant:

— Pour se déplacer en marche arrière, en ligne droite, le conducteur du véhicule tracteur 2 aligne ce dernier avec la remorque 3, met en place la goupille 19 dans les orifices 17, 18 et procède à la marche arrière, les roues directrices du véhicule 2 étant orientées en ligne droite. La remorque 3, rendue solidaire du véhicule tracteur 2, ne peut donc se déplacer qu'en ligne droite.

— Pour se déplacer en marche avant, le conducteur ôte la goupille 19 et le dispositif d'attelage 1 présente les mêmes avantages que les dispositifs connus.

— Pour effectuer une marche arrière selon une trajectoire courbe, le conducteur doit ôter la goupille 19 et procéder comme dans le cas des dispositifs d'attelage connus, à moins que la remorque 3 ne soit telle que décrite ci-après.

Le dispositif d'attelage 1, grâce aux bras croisés 4, 5 rend le renversement de la remorque 3 quasiment impossible à moins que le véhicule 2 ne se renverse lui aussi.

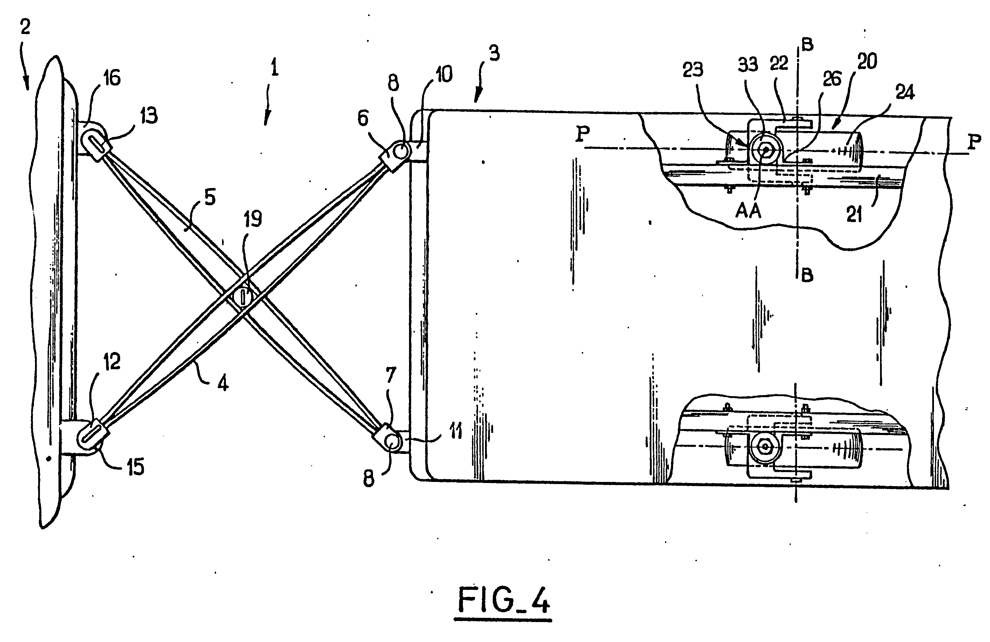

En référence aux figures 2, 3 et 4, les roues 20 de la remorque 3 sont montées au châssis 21 de la remorque 3 par l'intermédaire d'une chape 22 (voir notamment figure 4) et d'un pivot 23 incliné de 15° environ vers le véhicule tracteur 2. L'axe AA du pivot 23 ne coupe pas l'axe BB de la roue 20. L'axe AA est, en outre, sensiblement situé dans le plan médian longitudinal PP d'une bande de roulement 24 de la roue 20. Le châssis 21 présente un dégagement suffisant pour que la roue 20 puisse pivoter librement autour de l'axe AA.

La figure 3 montre avec plus de détail la constitution du pivot 23. Ce dernier comprend un corps 25 cylindrique fixé au châssis 21 par une bride 26. Une tige 27 rendue solidaire de la chappe 22 est guidée dans le corps 25 en rotation autour de l'axe AA et en translation le long de l'axe AA, d'une part au moyen d'un alésage pratiqué dans une embase 28 du corps 25 et, d'autre part dans le cylindre 29 d'un amortisseur 30, ce cylindre 29 étant solidaire du corps 25. La tige 27 présente un épaulement 27a sur lequel s'appuie une coupelle 31 libre en translation dans le corps 25. Un ressort hélicoïdal 32 est disposé entre la coupelle 31 et un fond 33 du corps 25.

Pour effectuer une marche arrière, le conducteur du véhicule tracteur 2 met en place la goupille 19 dans les orifices 17, 18 des bras croisés 4, 5, comme exposé en référence à la figure 1 et rend ainsi la remorque 3 solidaire du véhicule 2. Dès que le véhicule tracteur 2 commence à reculer, les roues 20 pivotent autour de l'axe AA des pivots 23, de façon que l'axe BB soit situé entre le dispositif d'attelage 1 et l'axe AA de ces pivots 23.

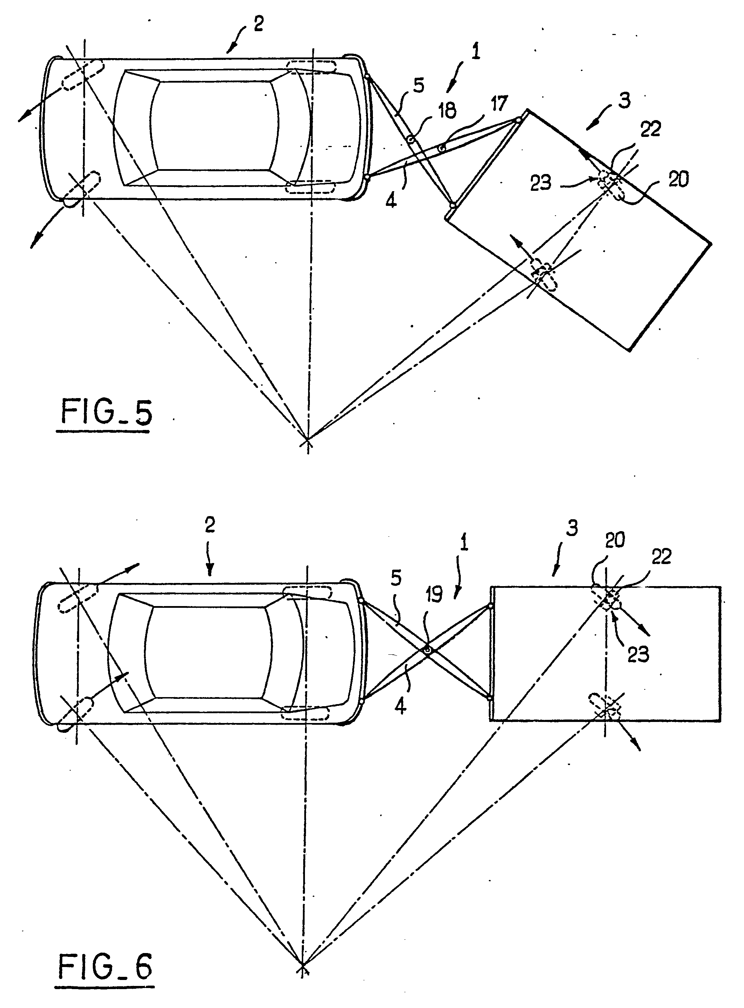

Si le véhicule 2 recule en ligne droite, tout se passe comme exposé en référence à la figure 1. Si le véhicule 2 recule selon une trajectoire courbe, on voit sur la figure 6 que les roues 20 s'orientent autour de leurs pivots 23 en accord avec la trajectoire déterminée par les roues avant du véhicule 2. Les manoeuvres en marche arrière sont donc considérablement facilitées puisque la trajectoire de la remorque ne peut pas s'écarter de celle du véhicule tracteur. Pour se déplacer en marche avant, le conducteur du véhicule 2 enlève la goupille 19 et procède comme dans le cas d'une remorque munie d'un dispositif d'attelage ordinaire. En virage en marche avant, comme représenté sur la figure 5, les orifices 17, 18 des bras croisés 4, 5 ne sont plus maintenus coaxiaux, de sorte que la remorque 3 peut pivoter librement par rapport au véhicule 2. De plus, les roues 20 pivotent autour de l'axe de leurs pivots 23 en accord avec la trajectoire du véhicule 2. Comme les pivots 23 sont inclinés, les mouvements brusques ou intempestifs de la remorque 3 par rapport au véhicule 2 sont évités.

Bien entendu, l'invention n'est pas limitée aux exemples qui viennent d'être décrits et de nombreux aménagements ou perfectionnements peuvent être apportés au dispositif d'attelage 1 et à la remorque 3 sans sortir du cadre de l'invention.

C'est ainsi que des moyens de friction peuvent être prévus entre les bras croisés 4, 5 pour mieux stabiliser encore la trajectoire de la remorque 3 par rapport à celle du véhicule 2. Les moyens de blocage, et en particulier la goupille 19, peuvent être commandés de l'intérieur du véhicule par l'intermédiaire de moyens de commande mécaniques, hydrauliques ou électromagnétiques. Ces moyens de commande pourraient être associés à la boîte à vitesses du véhicule 2 pour que la goupille 19 s'engage automatiquement dans les orifices 17, 18 des bras croisés 4, 5 quand la boîte à vitesses est en position de marche arrière, et se dégage automatiquement quand la boîte à vitesses est en position de marche avant.

L'inclinaison des pivots 23 peut être obtenue ou modifiée par la plongée vers l'avant d'une remorque perchée haute sur ses deux roues pivotantes et attelée basse et courte au véhicule tracteur.

On peut aussi prévoir que des moyens de commande de la goupille 19 sont reliés au pivot 23, pour que la goupille 19 s'engage dans les orifices 17, 18 dès que l'axe BB est situé entre le dispositif d'attelage 1 et l'axe AA des pivots 29, et de décage dans le cas inverse.

L'un des orifices 17, 18 peut être de section oblongue de façon à faciliter la mise en place de la goupille 19.

Le pivot 23 peut comporter des moyens de blocage pour permettre le blocage des roues 20 en rotation autour de l'axe AA, de façon que le plan PP soit parallèle au plan longitudinal médian de la remorque. Dans cette version, le conducteur peut bloquer les roues 20 dans cette position quand il se déplace en marche avant, et conférer ainsi une meilleure stabilité à la remorque 3. Ces moyens de blocage peuvent être commandés de l'intérieur du véhicule 2 par des moyens de commande mécaniques, hydrauliques ou électromagnétiques, et éventuellement reliés à la boîte à vitesses du véhicule 2 pour assurer le blocage des roues 20 quand la boîte à vitesses est en position de marche avant et le déblocage quand la boîte à vitesses est en position de marche arrière.

On peut aussi prévoir que les roues 20 sont couplées de façon à les maintenir orientées en accord l'une par rapport à l'autre autour de leur pivot 23 respectif. Ceci peut être réalisé au moyen d'une barre d'accouplement dont chaque extrémité est reliée à une biellette respective solidaire de la tige 27 correspondante qui, dans ce cas, dépasserait du fond 33 du pivot 23. Les moyens de blocage prévus dans le paragraphe précédent pourraient alors agir sur les biellettes ou sur la barre d'accouplement.

**Revendications**

1. 1. Dispositif d'attelage pour remorque (3), comprenant deux bras croisés (4, 5) comportant chacun une extrémité (6, 7) articulée à la remorque (3) et une extrémité (12, 13) destinée à être accrochée au véhicule tracteur (2), et des moyens de verrouillage (17, 18, 19) des bras (4, 5) l'un par rapport à l'autre, caractérisé en ce que les moyens de verrouillage comprennent un orifice (17, 18) pratiqué dans chacun desdits bras (4, 5) au point où ces derniers se croisent quand le véhicule tracteur (2) et la remorque (3) sont alignés, et une goupille (19) engagée de façon amovible dans ces deux orifices (17, 18).

2. Dispositif d'attelage conforme à la revendication 1, caractérisé en ce que les moyens de verrouillage sont associés à des moyens pour commander automatiquement lesdits moyens de verrouillage.

3. Dispositif d'attelage conforme à l'une des revendications 1 ou 2, caractérisé en ce que l'un des orifices (17 ou 18) est de section oblongue.

4. Dispositif d'attelage conforme à l'une quelconque des revendications 1 à 3, caractérisé en ce que les deux bras croisés (4), (5) reposent l'un sur l'autre par l'intermédiaire de moyens de friction.

5. Remorque comprenant deux bras croisés (4, 5) comportant chacun une extrémité (6, 7) articulée à la remorque (3) et une extrémité (12, 13) destinée à être accrochée au véhicule tracteur (2) et des moyens de verrouillage (17, 18, 19) pour maintenir ces deux bras (4, 5) en position symétrique par rapport au plan médian longitudinal de la remorque (3) lors d'une marche arrière, caractérisée en ce que les roues (20) de cette remorque (3) sont fixées à cette dernière par des pivots (23) comprenant des moyens pour assurer l'orientation des roues (20) en fonction de la trajectoire du véhicule tracteur (2).

6. Remorque conforme à la revendication 5, caractérisée en ce qu'elle comprend des moyens pour bloquer la rotation de chaque roue (20) autour de l'axe du pivot (23) correspondant dans la diection longitudinale de la remorque (3).

7. Remorque conforme à la revendication 5 ou 6 caractérisée en ce que, au titre des moyens pour assurer l'orientation des roues (20), l'axe (AA) de chaque pivot (23) ne coupe pas l'axe (BB) de la roue (20) correspondante, ledit axe (AA) de chaque pivot (23) étant sensiblement situé dans le plan médian longitudinal (PP) de la bande de roulement (24) de la roue correspondante (20).

8. Remorque conforme à l'une des revendications 5 à 7, caractérisée en ce que les moyens de verrouillage comprennent un orifice (17, 18) pratiqué dans chacun desdits bras (4, 5) au point où ces derniers se croisent quand le véhicule tracteur (2) et la remorque (3) sont alignés, et une goupille (19) engagée de façon amovible dans ces deux orifices (18, 19).

**Claims**

1. Fastening device for trailer (3) comprising two crossing arms (4, 5) each comprising one end (6, 7) pivoted on the trailer (3) and one end (12, 13) adapted to the fastened to the tractor vehicle (2), and means (17, 18, 19) for locking the arms (4, 5) with respect to each other, characterized in that the locking means comprise an orifice (17, 18) made in each of said arms (4, 5) at the point where the latter intersect when the tractor vehicle (2) and the trailer (3) are aligned, and a pin (19) removably engaged in these two orifices (17, 18).

2. Fastening device according to claim 1, wherein the locking means are associated with means for automatically controlling said locking means.

3. Fastening device according to any of claims 1 or 2, wherein one of the orifices (17 or 18) is of oblong section.

4. Fastening device according to any of claims 1 to 3, wherein the two crossing arms (4), (5) rest on each other via friction means.

5. Trailer comprising two crossing arms (4, 5) each comprising one end (6, 7) pivoted on the trailer (3) and one end (12, 13) adapted to be fastened to the tractor vehicle (2) and locking means (17, 18, 19) for maintaining these two arms (4, 5) in symmetrical position with respect to the longitudinal median plane of the trailer (3) during reversing, characterized in that the wheels (20) of this trailer (3) are fixed thereto by swivel pins (23) comprising means for ensuring orientation of the wheels (20) as a function of the path of the tractor vehicle (2).

6. Trailer device according to claim 5, wherein it comprises means for blocking rotation of each wheel (20) about the axis of the corresponding swivel pin (23) in the longitudinal · direction of the trailer (3).

7. Trailer device according to any of claims 5 or 6, wherein it comprises as means for ensuring orientation of the wheels (20), the axis (AA) of each swivel pin (23) does not intersect the axis (BB) of the corresponding wheel (20), said axis (AA) of each swivel pin (23) being substantially located in the longitudinal median plane (PP) of the tread (24) of the corresponding wheel (20).

8. Trailer device according to any of claims 5 to 7, wherein the locking means (5) comprise an orifice (17, 18) made in each of said arms (4, 5) at the point where the latter intersect when the tractor vehicle (2) and the trailer (3) are aligned, and a pin (19) removably engaged in these two orifices (18, 19).

**Patentansprüche**

1. Befestigungsvorrichtung für Anhänger (3) umfassend zwei getrennte Arme (4, 5), deren jeder ein gelenkig an den Anhänger (3) angeschlossenes Ende (6, 7) aufweist und ein Ende (12, 13), das dazu bestimmt ist, mit dem Zugfahrzeug (2) verbunden zu werden, und mit Verriegelungsmitteln (17, 18, 19) zur gegenseitigen Verriegelung dieser Arme (4, 5), dadurch gekennzeichnet, daß die Verriegelungsmittel eine Öffnung (17, 18) umfassen, welche an der Stelle eines jeden dieser Arme (4, 5) angeordnet ist, wo sich letztere kreuzen, wenn das Zugfahrzeug (2) und der Anhänger (3) sich in gestreckter Stellung befinden, und daß ein Bolzen (19) lösbar in diese Öffnung (17, 18) eingesetzt ist.

2. Befestigungsvorrichtung nach Anspruch 1, dadurch gekennzeichnet, daß diese Verriegelungsmittel (17, 18, 19) Mitteln zur automatischen Steuerung dieser Verriegelungsmittel zugeordnet sind.

3. Befestigungsvorrichtung nach einem der Ansprüche 1 oder 2, dadurch gekennzeichnet, daß die eine dieser Öffnungen (17 oder 18) einen länglichen Querschnitt aufweist.

4. Befestigungsvorrichtung nach einem der vorhergehenden Ansprüche, dadurch gekennzeichnet, daß die beiden gekreuzten Arme (4, 5) unter Zwischenschaltung eines Gleitlagerelements aufeinanderliegen.

5. Anhänger mit zwei gekreuzten Armen (4, 5), von denen jeder ein gelenkig mit dem Anhänger (3) verbundenes Ende (6, 7) umfaßt und ein Ende (12, 13), welches dazu bestimmt ist, mit dem Zugfahrzeug (2) verbunden zu werden, und mit Verriegelungsmitteln (17, 18, 19), welche dazu bestimmt sind, während einer Rückwärtsfahrt die beiden Arme (4, 5) in einer in bezug auf die Längsmittelebene des Anhängers (3) symmetrischen Position zu halten, dadurch gekennzeichnet, daß die Räder (20) dieses Anhängers (3) an letzterem mittels Schwenkachsen (23) verbunden sind, die Mittel zur Sicherung der Ausrichtung der Räder (20) in Abhängigkeit von der Bahn des Zugfahrzeugs (2) umfassen.

6. Anhänger nach Anspruch 5, dadurch gekennzeichnet, daß er Mittel zur Blockierung der Drehung eines jeden Rades (20) um die Schwenkachse (23) in einer der Längsrichtung des Anhängers (3) entsprechenden Stellung umfaßt.

7. Anhänger nach einem der Ansprüche 5 oder 6, dadurch gekennzeichnet, daß zur Sicherung der Ausrichtung der Räder (20) die Achse (AA) einer jeden Schwenkachse (23) die Achse (BB) des zugehörigen Rades (20) nicht schneidet und daß diese Achse (AA) einer jeden Schwenkachse (23) im wesentlichen in der Längsmittelebene (PP) der Lauffläche (24) des entsprechenden Rades (20) anteordnet ist.

8. Anhänger nach einem der Ansprüche 5 bis 7, dadurch gekennzeichnet, daß die Verriegelungsmittel eine Öffnung (17, 18) umfassen, die an der Stelle in jedem dieser Arme (4, 5) ausgebildet ist, an der sich die letzteren kreuzen, wenn das Zugfahrzeug (2) und der Anhänger (3) sich in gestreckter Lage befinden, und daß ein Bolzen (19) lösbar in diese beiden Öffnungen (18, 19) eingesetzt ist.

**0 020 703**

FIG_1

FIG_2

FIG_3

FIG_4

FIG_5

FIG_6